# EUROPEAN PATENT APPLICATION

(11) **EP 1 615 363 A1**
(43) Date of publication of application: **11.01.2006**
(21) Application number: 03816643.5
(22) Date of filing: 11.04.2003
(51) Int. Cl.: H04J 3/14, H04L 12/56

(54) **COMMUNICATION DEVICE**

(71) Applicant: MITSUBISHI DENKI KABUSHIKI KAISHA, Tokyo 100-8310 (JP)
(72) Inventor: HARADA, Yoshihisa Mitsubishi Denki K.K., Chiyoda-ku, Tokyo 100-8310 (JP)
(74) Representative: Popp, Eugen
(86) International application number: PCT/JP2003/004668
(87) International publication number: WO 2004/093358

(57) **Abstract**

A communication apparatus includes a multiplexing transmission unit (1) for multiplexing and transmitting communication data, an operation monitoring control terminal (3) for monitoring the multiplexing transmission unit (1), and an IP terminal (2) connected with the multiplexing transmission unit (1) by way of a physical interface between the multiplexing transmission unit (1) and the operation monitoring control terminal (3) which the IP terminal shares with the operation monitoring control terminal, the IP terminal converting a signal inputted to the communication apparatus from outside into IP packets, and furnishing them to the multiplexing transmission unit (1). The multiplexing transmission unit (1) multiplexes the IP packets furnished thereto from the IP terminal (2) and communication data, and then transmits them to a station which is disposed opposite to the communication apparatus.

## Description

### Field of the Invention

The present invention relates to a communication apparatus which is used for digital communications, and which implements an arrangement channel by means of a multiplexing transmission unit which efficiently transmits voice, data, FAX signals, etc.

### Background of the Invention

A multiplexing transmission unit is a unit that is installed between exchanges in order to use channels more effectively, and that compresses and multiplexes voice signals transmitted thereto via many channels by using a voice coding technology and a soundless compression technology (DSI: Digital Speech Interpolation), and efficiently transmits the multiplexed voice signals by way of a small number of channels. A multiplexing transmission unit is installed in each of a receive side and a transmit side, and the multiplexing transmission unit on the receive side decompresses and demultiplexes signals compressed and multiplexed by the multiplexing transmission unit on the transmit side. The multiplexing transmission unit on the transmit side can also compress and multiplex data, FAX signals, images, etc., other than voice, and can transmit them to the multiplexing transmission unit on the receive side.

A multiplexing transmission unit has a function of setting up an arrangement channel for operation and maintenance of the unit itself and channels so as to make it possible to carry out voice communications via this arrangement channel in addition to the function of efficiently transmitting voice, data, FAX signals, etc. between subscriber terminals, as mentioned above. The arrangement channel is also called an orderwire (i.e., an order wire). Usually, a maintenance person calls an opposite station disposed opposite to a multiplexing transmission unit using a handset connected to the multiplexing transmission unit, and, when another maintenance person on a side of the opposite station answers this call, a telephone call becomes possible.

A method of implementing an arrangement channel between exchanges in an ATM (Asynchronous Transfer Mode) network is disclosed by Japanese patent application publication No. 7-221764. In accordance with the method disclosed by Japanese patent application publication No. 7-221764, control information is inputted into a network terminal device via an arrangement channel from a maintenance person on a side of a station A, and the above-mentioned control information is sent to another maintenance person for a network termination on a side of an opposite station disposed opposite to the station A, i.e., a B station, via an ATM exchange. Thus, in order to implement an arrangement channel between ATM exchanges, the network terminal device has a physical interface intended for the arrangement channel in addition to a physical interface with channels (i.e., general channels) intended for subscriber terminals. As in the case of Japanese patent application publication No. 7-221764, in a prior art communication apparatus that implements an arrangement channel between multiplexing transmission units which comply with an STM (Synchronous Transfer Mode) network, each of the multiplexing transmission units is provided with a physical interface for an arrangement channels in addition to a physical interface for general channels inputted thereto from an exchange.

The above-mentioned prior art communication apparatus is provided with an arrangement channel control unit disposed between the multiplexing transmission unit and the handset. The arrangement channel control unit digitizes an analog voice signal inputted thereto from the handset, and transmits the digitized voice signal to the multiplexing transmission unit. The multiplexing transmission unit multiplexes the digitized voice signal which is furnished thereto from the arrangement channel control unit with a primary group signal furnished thereto from an exchange intended for general channels, and then sends out the multiplexed signals onto a bearer channel and transmits them to another multiplexing transmission unit disposed opposite to the multiplexing transmission device. When a station has two or more multiplexing transmission units, the arrangement channel control unit determines whether to set up an arrangement channel for which one of the plurality of multiplexing transmission units.

An operation monitoring control terminal is connected to the multiplexing transmission unit. The operation monitoring control terminal carries out monitoring of the operation of the multiplexing transmission unit, a setup of various control parameters, and monitoring of the status of traffic passing through the multiplexing transmission unit, and then displays monitoring results on a display or the like.

A problem with a prior art communication apparatus constructed as above is that since it needs to be provided with an arrangement channel control unit intended for control in order to implement an arrangement channel, a special-purpose unit needs to be provided. Another problem is that since the physical interface between the arrangement channel control unit and the multiplexing transmission unit has a special structure for each type of unit provided with an arrangement channel control unit, the multiplexing transmission unit needs to have a special-purpose interface intended for arrangement channels.

The present invention is made in order to solve the above-mentioned problems, and it is therefore an object of the present invention to provide a communication apparatus that can implement an arrangement channel with a simplified hardware configuration and without having to provide any special-purpose unit and any special interface.

### Disclosure of the Invention

In accordance with an aspect of the present invention, there is provided a communication apparatus including: a multiplexing transmission unit for multiplexing and transmitting communication data; an operation monitoring control terminal for monitoring the multiplexing transmission unit; and an IP terminal connected with the multiplexing transmission unit by way of a physical interface between the multiplexing transmission unit and the operation monitoring control terminal which the IP terminal shares with the operation monitoring control terminal, the IP terminal converting a signal inputted to the communication apparatus from outside into IP packets, and furnishing them to the multiplexing transmission unit, and the multiplexing transmission unit multiplexing the IP packets furnished thereto from the IP terminal and the communication data, and then transmitting them.

Therefore, the aspect of the present invention offers an advantage of being able to eliminate the need for special-purpose hardware used for setting up an arrangement channel and another advantage of being able to implement the arrangement channel by using the communication apparatus having a simplified hardware structure.

In accordance with another aspect of the present invention, there is provided a communication apparatus including: a multiplexing transmission unit for multiplexing and transmitting communication data; an operation monitoring control terminal for monitoring the multiplexing transmission unit; and an IP terminal for converting a signal inputted to the communication apparatus from outside into IP packets, and for furnishing them to the multiplexing transmission unit via the operation monitoring control terminal, the multiplexing transmission unit multiplexing the IP packets furnished thereto from the IP terminal and the communication data, and then transmitting them.

Therefore, the other aspect of the present embodiment offers an advantage of being able to implement an arrangement channel by using the communication apparatus having a simplified hardware structure, and another advantage of being able to perform routing of the arrangement channel.

In accordance with a further aspect of the present invention, there is provided a communication apparatus including: a multiplexing transmission unit for multiplexing and transmitting communication data; and an operation monitoring control terminal for monitoring the multiplexing transmission unit, the operation monitoring control terminal converting a signal inputted to the communication apparatus from outside into IP packets, and furnishing them to the multiplexing transmission unit, and the multiplexing transmission unit multiplexing the IP packets furnished thereto from the IP operation monitoring control terminal and the communication data, and then transmitting them.

Therefore, the further aspect of the present embodiment offers an advantage of being able to implement an arrangement channel by using either a general-purpose handset, or a microphone and a speaker.

### Brief Description of the Figures

Fig. 1 is a block diagram of a communication apparatus in accordance with embodiment 1 of the present invention;
Fig. 2 is a block diagram of a multiplexing transmission unit of Fig. 1;
Fig. 3 is a block diagram of an IP telephone terminal of Fig. 1;
Fig. 4 is a diagram showing an example of time slots of an STM network;
Fig. 5 is a block diagram of a communication apparatus in accordance with embodiment 2 of the present invention;
Fig. 6 is a block diagram of an operation monitoring control terminal of Fig. 5; and
Fig. 7 is a block diagram of an operation monitoring control terminal of a communication apparatus in accordance with embodiment 3 of the present invention.

### Preferred Embodiments of the Invention

In order to explain the invention in greater detail, the preferred embodiments of the invention will be explained below with reference to the accompanying figures.

### Embodiment 1.

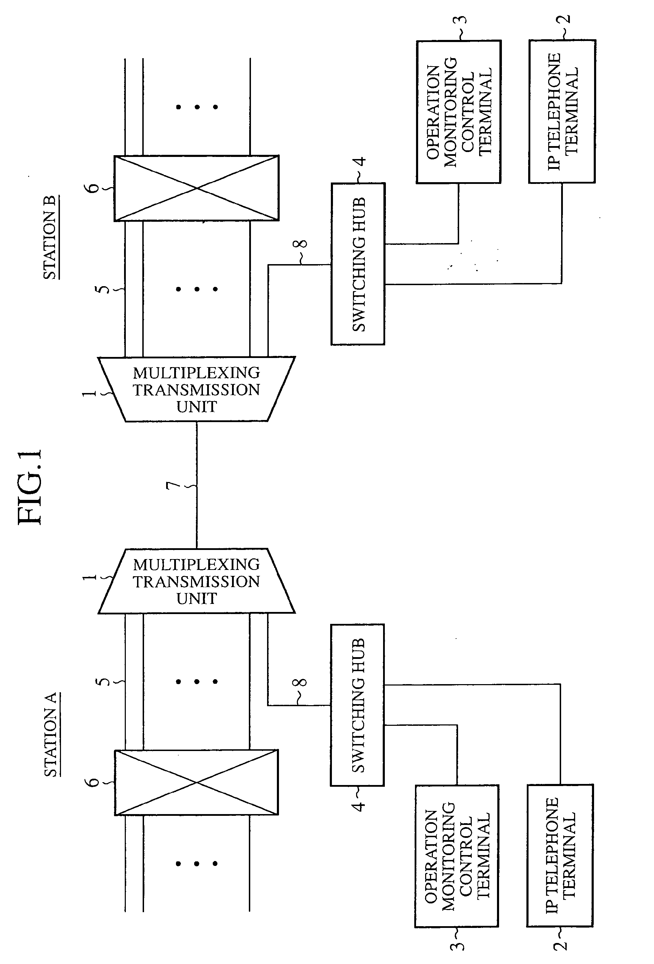

Fig. 1 is a block diagram showing the structure of a communication apparatus in accordance with embodiment 1 of the present invention. Fig. 1 shows the structures of a station A and another station B which are disposed opposite to each other. The communication apparatus at each of the two stations is provided with a multiplexing transmission unit 1, an IP (Internet Protocol) telephone terminal 2, an operation monitoring control terminal 3, and a switching hub 4. An exchange 6 is connected to the multiplexing transmission unit 1 of each of the two communication apparatus by way of a primary channel group 5. A bearer channel 7 having an STM network interface connects between the multiplexing transmission units 1 of the two stations, and the multiplexing transmission units 1 are transmission units which comply with an STM network.

The operation monitoring control terminal 3 is connected, via the switching hub 4, to the multiplexing transmission unit 1 by an Ethernet (registered trademark) interface. The IP telephone terminal 2 shares the physical interface between the operation monitoring control terminal 3 and the multiplexing transmission unit 1, and is connected, via the switching hub 4, to the multiplexing transmission unit 1.

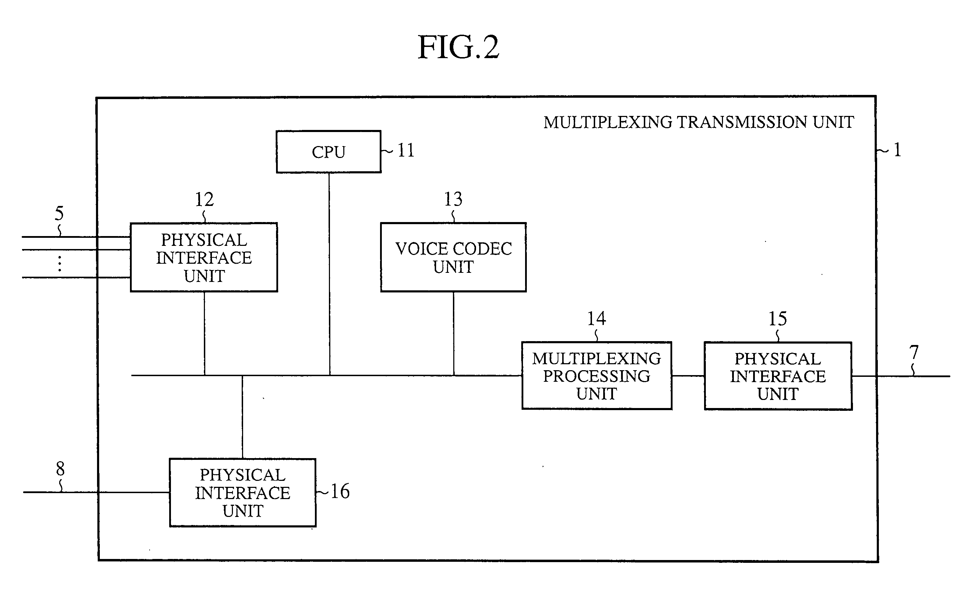

Fig. 2 is a block diagram of each multiplexing transmission unit 1 of Fig. 1. As shown in the figure, each multiplexing transmission unit 1 is provided with a CPU 11, physical interface units 12, 15, and 16, a voice CODEC unit 13, and a multiplexing processing unit 14. The physical interface unit 12 works according to a protocol which the primary group channels 5 commonly use, the physical interface unit 15 works according to a protocol which the bearer channel 7 commonly uses, and the physical interface unit 16 works according to a protocol which the Ethernet channel 8 commonly uses.

A flow of signals transmitted via main channels, i.e., signals transmitted between subscriber terminals will be explained with reference to Figs. 1 and 2.

Signals from subscriber terminals (not shown) on the side of the station A are furnished, as primary group signals, to the multiplexing transmission unit 1 via the exchange 6 on the side of the station A. The multiplexing transmission unit 1 captures the primary group signals via the physical interface unit 12, and identifies the captured signals. When the primary group signals are voice signals transmitted thereto from telephones or the like, the voice CODEC unit 13 performs voice coding processing on the voice signals so as to compress them. The CPU 11 multiplexes the voice signals by performing soundless compression processing on them. In a case where the primary group signals are data, FAX signals, or the like, other than voice signals, a CODEC unit (not shown) that differs from the voice CODEC unit 13 compresses the primary group signals. For example, in order to transmit and receive FAX signals, the multiplexing transmission unit 1 can be provided with a function of performing demodulation transmission, and can perform compression and multiplexing processing using this function. The multiplexing processing unit 14 can carry out multiplexing processing on the voice signals compressed by the voice CODEC unit 13, as well as other compressed information, such as compressed data and compressed FAX signals. The multiplexing processing unit 14 then sends out the multiplexed signals onto the bearer channel 7 via the physical interface unit 15.

The multiplexing transmission unit 1 on the side of the station B assigns each piece of compression and multiplexing information about the station A which is transmitted thereto as a bearer signal to a corresponding primary group channel 5 by means of the multiplexing processing unit 14. The multiplexing transmission unit 1 on the side of the station B decodes the compressed voice signals by means of the voice CODEC unit 13. Each signal assigned to a corresponding primary group channel 5 and each decoded voice signal are transmitted to a corresponding subscriber terminal via the exchanger 6 from the physical interface unit 12. Communications via the main channels from the station-A side to the station-B side are thus implemented. Communications from the station-B side to the station-A side can be implemented in the same way.

The multiplexing transmission unit 1 has a function of setting up or establishing an arrangement channel for operation and maintenance of the multiplexing transmission unit 1 itself and channels, in addition to the function of compressing and multiplexing signals to be transmitted via the main channels, and transmitting them. As shown in Fig. 1, in order to set up an arrangement channel, the IP telephone terminal 2 and the operation monitoring control terminal 3 which share the physical interface with the multiplexing transmission unit 1 are connected to the multiplexing transmission unit 1 via the switching hub 4 in each station. The IP telephone terminal 2 is installed for telephone calls at a time of maintenance between the multiplexing transmission unit 1 on the side of the station A and the multiplexing transmission unit 1 on the side of the station B. The operation monitoring control terminal 3 performs a setup of operational parameters to the multiplexing transmission unit 1, monitoring of statistical information of traffic passing through the multiplexing transmission unit 1, i.e., a ratio of voice signals, data, FAX signals, etc. to the total traffic, and monitoring of the operation of each component of the multiplexing transmission unit 1.

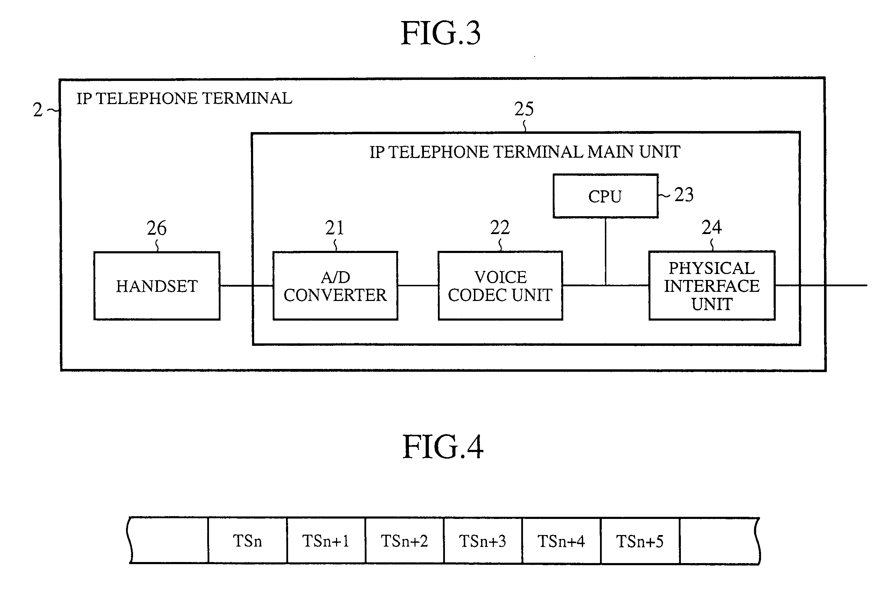

Fig. 3 is a block diagram of each IP telephone terminal 2 of Fig. 1. As shown in the figure, each IP telephone terminal 2 is provided with an IP telephone terminal main unit 25 and a handset 26. The IP telephone terminal main unit 25 is provided with an A/D converter 21, a voice CODEC unit 22, a CPU 23, and a physical interface unit 24. The handset 26 is provided with a microphone (not shown) that receives a voice signal and converts it into an electric signal, and a speaker (not shown) that converts an electric signal into a voice signal. The physical interface unit 24 works according to a protocol which the Ethernet channel commonly uses.

When a voice signal is sent from the station-A side to the station-B side via the arrangement channel, the multiplexing transmission unit 1 multiplexes voice packets outputted from the IP telephone terminal 2 on the side of the station A and the primary group signals transmitted thereto via the main channels, and sends out them onto the bearer channel 7 so as to transmit them to the multiplexing transmission unit 1 on the side of the station B. The multiplexing transmission unit 1 on the side of the station B extracts the voice packets transmitted thereto via the arrangement channel from the multiplexed signals transmitted thereto via the bearer channel 7. The extracted voice packets are then transmitted to the IP telephone terminal 2 on the side of the station B via the switching hub 4, and the voice is reproduced by the IP telephone terminal 2. Transmission of voice from the station-B side to the station-A side can be carried out in the same way.

Next, a flow of a signal via the arrangement channel will be explained in greater detail with reference to Figs. 2 and 3.

When a maintenance person utters voice to the handset 26, the microphone receives it and converts it into an electric signal and the A/D converter 21 within the IP telephone terminal main unit 25 digitizes the electric signal. The voice CODEC unit 22 then encodes the digitized signal, and the CPU 23 further packetizes the encoded, digitized signal into IP packets. The IP-packetized voice signal is outputted from the IP telephone terminal 2 via the physical interface unit 24.

The IP packets outputted from the IP telephone terminal 2 are then furnished to the multiplexing transmission unit 1 via the switching hub 4, and are captured by the multiplexing transmission unit 1 via the physical interface unit 16. The CPU 11 of the multiplexing transmission unit 1 then converts these IP packets into a signal which complies with the STM network. In other words, the CPU 11 extracts voice information from the IP packets and processes it into a time-slot based signal which complies with the STM network. The multiplexing processing unit 14 then multiplexes the processed voice signal and signals transmitted to the multiplexing transmission unit via the main channels, and sends out the multiplexed signals onto the bearer channel 7 via the physical interface unit 15.

Fig. 4 is a diagram showing an example of time slots of the STM network. The voice signal to be transmitted via the arrangement channel is transmitted to the opposite station by using a time slot of the STM network, e.g., a time slot TSₙ of Fig. 4. The nest time slot TSₙ₊₁ and later time slots are used for transmission of voice signals transmitted to the multiplexing transmission unit via the main channels, e.g., voice signals from subscriber terminals.

In the multiplexing transmission unit 1 on the side of the opposite station, the multiplexed signals transmitted thereto via the bearer channel 7 are identified by the CPU 11. Signals other than the IP packets transmitted thereto via the arrangement channel are transmitted to destination subscriber terminals, and the IP packets transmitted via the arrangement channel are transmitted to the IP telephone terminal 2 via the switching hub 4. The IP packets are depacketized and decoded by the CPU 23 and the voice CODEC unit 22, and are reproduced by the speaker of the handset 26 after converted into an analog signal by the A/D converter 21.

The operation monitoring control terminal 3 performs a setup of operational parameters to the multiplexing transmission unit 1 via the switching hub 4, monitoring of traffic, monitoring of the operation of each component of the multiplexing transmission unit 1, etc., as appropriate while the IP packets are transmitted as mentioned above.

Communications using the arrangement channel are thus implemented by the above-mentioned operation. Transmission of voice from the IP telephone terminal 2 on the side of the station B to the station-A side can be carried out in the same way.

In general, in each multiplexing transmission unit 1 which complies with the STM network, the signal interfaces disposed for both the primary group channels and the bearer channel can be E1/T1 interfaces. The physical interface with both the IP telephone terminal 2 and the operation monitoring control terminal 3 can be an Ethernet interface.

As mentioned above, in accordance with this embodiment 1, the communication apparatus is provided with a multiplexing transmission unit that is so constructed as to carry out communications via the arrangement channel by using the IP telephone terminal 2 with which the operation monitoring control terminal 3 shares a physical interface and which is connected to the multiplexing transmission unit 1. Therefore, since no special-purpose hardware used for setting up an arrangement channel is needed and no special interface is needed for the multiplexing transmission unit 1, the present embodiment provides an advantage of being able to implement an arrangement channel by using the communication apparatus having a simple structure.

In accordance with this embodiment 1, a transmission unit which complies with the STM network is used as the multiplexing transmission unit 1, as previously mentioned. As an alternative, either a transmission unit which complies with an ATM network or a gateway apparatus that connects an STM network with an IP network can be used as the multiplexing transmission unit 1. In either case, only the signal transmission format of the network is changed, and the arrangement channel has the same structure as shown above.

The IP telephone terminal is used as the IP terminal, as previously mentioned. As an alternative, a terminal that can convert an incoming signal to IP packets and send out the IP packets can be used as the IP terminal. In this case, data or the like other than voice can be transmitted via the arrangement channel.

### Embodiment 2.

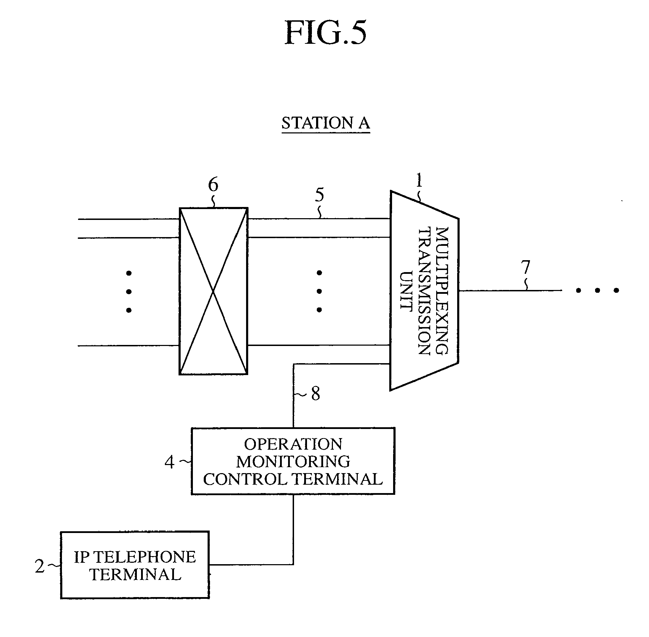

Fig. 5 is a block diagram of a communication apparatus in accordance with this embodiment 2. The same components as those shown in Fig. 1 are designated by the same reference numerals as shown in Fig. 1, and the explanation of the components will be omitted hereafter. In Fig. 5, only the structure of a station A is illustrated. A multiplexing transmission unit 1 has a structure shown in Fig. 2, and an IP telephone terminal 2 has a structure shown in Fig. 3.

In the communication apparatus in accordance with embodiment 1, the IP telephone terminal 2 and the operation monitoring control terminal 3 share a physical interface and are connected to the multiplexing transmission unit 1 via the switching hub 4, as previously mentioned. In contrast, the communication apparatus in accordance with this embodiment 2 is so constructed that an IP telephone terminal 2 is connected to an operation monitoring control terminal 3 and the operation monitoring control terminal 3 is further connected to the multiplexing transmission unit 1.

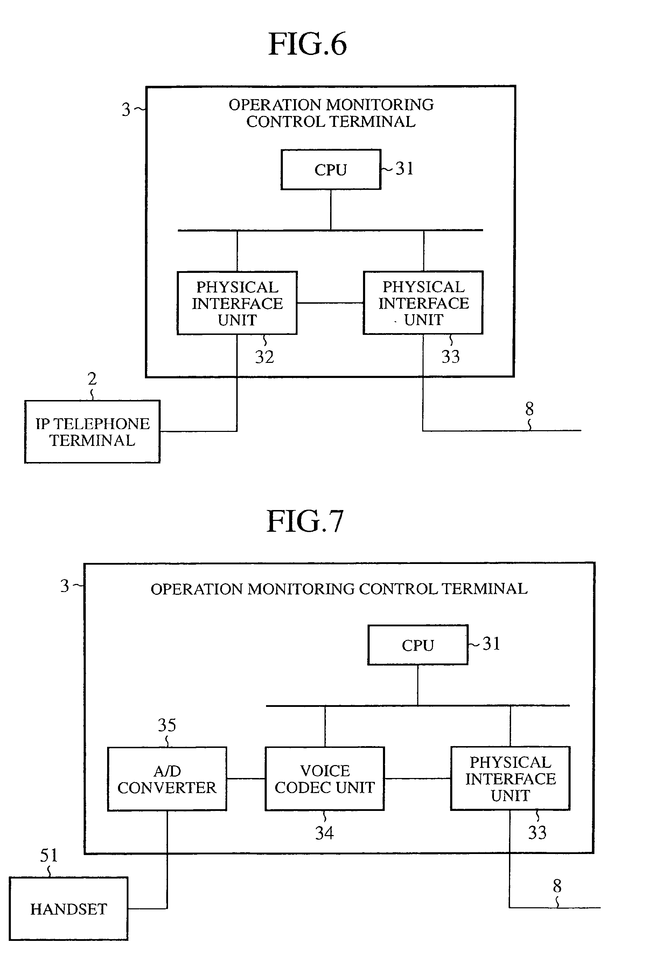

Fig. 6 is a block diagram of the operation monitoring control terminal 3 of Fig. 5. As shown in the figure, the operation monitoring control terminal 3 is provided with a CPU 31 and physical interface units 32 and 33. The physical interface unit 32 works according to a protocol which the IP phone terminal 2 commonly uses, and the physical interface unit 33 works according to a protocol with which the multiplexing transmission unit 1 commonly uses.

Next, a flow of a signal via an arrangement channel will be explained.

When a maintenance person inputs voice into the IP telephone terminal 2, the IP telephone terminal 2 furnishes IP packets including a voice signal, via the physical interface unit 32, to the operation monitoring control terminal 3. The CPU 31 transmits the IP packets furnished thereto to the physical interface unit 33 just as they are, and then outputs them to the multiplexing transmission unit 1 . On the other hand, when IP packets are delivered to the operation monitoring control terminal 3 from the multiplexing transmission unit 1 via an Ethernet channel 8, the CPU 31 sends out them to the IP telephone terminal 2 via the physical interface unit 32 just as they are.

The CPU 31 has an operation monitoring control function. For example, the CPU 31 captures alarm information and so on transmitted to the operation monitoring control terminal from the multiplexing transmission unit 1 via the Ethernet channel 8 by way of the physical interface unit 33, and displays the alarm information and so on on a display unit (not shown) . The operation monitoring control terminal 3 sends out setting values of operation and operation parameters which a maintenance person has set up and so on to the multiplexing transmission unit 1 via the physical interface unit 33. The operation monitoring control terminal 3 further performs path control of the arrangement channel. In other words, when a certain station has two or more multiplexing transmission units, the operation monitoring control terminal 3 controls whether to set up an arrangement channel for which one of the two or more multiplexing transmission units.

As mentioned above, in accordance with this embodiment 2, the IP telephone terminal 2 is connected to the multiplexing transmission unit 1 via the operation monitoring control terminal 3. Therefore, the present embodiment offers an advantage of being able to implement the arrangement channel by using the communication apparatus having a structure more simple than that of the communication apparatus in accordance with embodiment 1, and another advantage of being able to perform routing of the arrangement channel.

The operation monitoring control terminal 3 of this embodiment has the hardware configuration as shown in Fig. 6. As an alternative, the operation monitoring control terminal 3 can be constructed of a general-purpose personal computer or workstation, and a part of the processing performed by the CPU 31 of Fig. 6 and the physical interface units 32 and 33 can be constructed of a network interface card.

### Embodiment 3.

Fig. 7 is a block diagram of an operation monitoring control terminal 3 of a communication apparatus in accordance with embodiment 3 of the present invention. The communication apparatus of this embodiment 3 is provided with a handset 51, instead of the IP telephone terminal 2 of embodiment 2. As shown in Fig. 7, the operation monitoring control terminal 3 is provided with a voice CODEC unit 34 and an A/D converter 35. The same components as those shown in Fig. 6 are designated by the same reference numerals as shown in Fig. 6, and the explanation of the components will be omitted hereafter. The handset 51 is connected to the A/D converter 35 of the operation monitoring control terminal 3. The handset 51 is provided with a microphone and a speaker which are not shown in Fig. 7.

Next, a flow of a signal via an arrangement channel will be explained.

When a maintenance person inputs voice into the handset 51, the A/D converter 35 digitizes an analog signal from the handset. Then, the voice CODEC unit 34 encodes the voice signal digitized by the A/D converter. The CPU 31 further IP-packetizes the encoded voice signal, and sends out the IP-packetized, encoded voice signal to a multiplexing transmission unit 1 via a physical interface unit 33. On the other hand, a signal which the operation monitoring control terminal 3 captures from the multiplexing transmission unit 1 via the physical interface unit 33 is depacketized and decoded by the CPU 31 and the voice CODEC unit 34, and is reproduced by the handset 51 after converted into an analog signal by the A/D converter 35.

The CPU 31 has an operation monitoring control function. For example, the CPU 31 captures alarm information and so on transmitted to the operation monitoring control terminal from the multiplexing transmission unit 1 via an Ethernet channel 8 by way of the physical interface unit 33, and displays the alarm information and so on on a display unit (not shown). The operation monitoring control terminal 3 sends out various parameters which a maintenance person has set up to the multiplexing transmission unit 1 via the physical interface unit 33. The operation monitoring control terminal 3 further performs path control of the arrangement channel. In other words, when a certain station has two or more multiplexing transmission units, the operation monitoring control terminal 3 controls whether to set up an arrangement channel for which one of the two or more multiplexing transmission units.

The handset 51 shown in Fig. 7 can be so constructed that the microphone and the speaker are separated. When the operation monitoring control terminal 3 is a general-purpose personal computer, a hardware interface with a microphone and a speaker that come standard with the personal computer can be used as the handset.

As mentioned above, in accordance with this embodiment 3, in the operation monitoring control terminal 3 of the communication apparatus, the A/D converter 35 digitizes an analog signal and the voice CODEC unit 34 encodes a digital signal from the A/D converter, and the CPU 31 converts the encoded voice signal into IP packets. Therefore, the present embodiment offers an advantage of being able to implement an arrangement channel by using either a general-purpose handset, or a microphone and a speaker.

### Industrial Applicability

As mentioned above, the communication apparatus in accordance with the present invention is suitable for implementing an arrangement channel by means of a multiplexing transmission unit without manufacturing special hardware.

## Claims

1. A communication apparatus comprising:
a multiplexing transmission unit for multiplexing and transmitting communication data;
an operation monitoring control terminal for monitoring said multiplexing transmission unit; and
an IP terminal connected with said multiplexing transmission unit by way of a physical interface between said multiplexing transmission unit and said operation monitoring control terminal which said IP terminal shares with said operation monitoring control terminal, said IP terminal converting a signal inputted to said communication apparatus from outside into IP packets, and furnishing them to said multiplexing transmission unit,
said multiplexing transmission unit multiplexing the IP packets furnished thereto from said IP terminal and said communication data, and then transmitting them.

2. A communication apparatus comprising:
a multiplexing transmission unit for multiplexing and transmitting communication data;
an operation monitoring control terminal for monitoring said multiplexing transmission unit; and
an IP terminal for converting a signal inputted to said communication apparatus from outside into IP packets, and for furnishing them to said multiplexing transmission unit via said operation monitoring control terminal,
said multiplexing transmission unit multiplexing the IP packets furnished thereto from said IP terminal and said communication data, and then transmitting them.

3. A communication apparatus comprising:
a multiplexing transmission unit for multiplexing and transmitting communication data; and
an operation monitoring control terminal for monitoring said multiplexing transmission unit,
said operation monitoring control terminal converting a signal inputted to said communication apparatus from outside into IP packets, and furnishing them to said multiplexing transmission unit,
said multiplexing transmission unit multiplexing the IP packets furnished thereto from said IP operation monitoring control terminal and said communication data, and then transmitting them.
